# EUROPÄISCHE PATENTSCHRIFT

(11) **EP 1 458 057 B1**
(45) Veröffentlichungstag und Bekanntmachung des Hinweises auf die Patenterteilung: **23.06.2010**
(21) Anmeldenummer: 04004826.6
(22) Anmeldetag: 02.03.2004
(51) Int. Cl.: H01R 13/44

(54) **Berührsichere Dose**
Protection box
boîtier de protection

(30) Priorität: 11.03.2003 DE 10310875
(43) Veröffentlichungstag der Anmeldung: 15.09.2004
(73) Patentinhaber: Günther Spelsberg GmbH & Co. KG, 58579 Schalksmühle (DE)
(72) Erfinder: Deschouffour, Michael, 44629 Herne (DE); Niclas, Peter, 58509 Lüdenscheid (DE); Quardt, Dirk, Dipl.-Ing., 58638 Iserlohne (DE); Spelsberg, Holger, Dipl. -Ing., 58507 Lüdenscheid (DE); Wasserfuhr, Friedel, Dipl.-Ing., 51688 Wipperfürth (DE); Werkshagen, Bernd, 58579 Schalksmühle (DE)
(74) Vertreter: Michalski Hüttermann & Partner Patentanwälte

(56) Entgegenhaltungen:
- DE-A1- 3 710 242
- DE-B1- 2 704 121

## Beschreibung

Die Erfindung betrifft eine berührsichere Dose zur Aufnahme einer Klemme, wie einer Lüsterklemme, mit einem Gehäusewände und einen Gehäuseboden aufweisenden Gehäuse sowie einem Gehäusedeckel zum Verschließen der offenen Seite des Gehäuses, wobei das Gehäuse in einander gegenüberliegenden Seiten des Gehäuses jeweils eine Öffnung für die Zuführung eines eine Außenisolierung und darin vorgesehene elektrische Leiter umfassenden Kabels zu der Klemme aufweist.

Eine Dose der eingangs genannten Art ist z. B. aus der DE 202 09 701 bekannt. Die dort beschriebene Dose weist in ihrem Gehäuse zwei Öffnung auf, wobei eine erste Öffnung derart dimensioniert ist, daß eine starre Installationsleitung, wie eine NYM-Leitung, als Zuleitung durch die erste Öffnung durchführbar ist und eine andere, der ersten Öffnung gegenüberliegende zweite Öffnung im Abmaß dem Querschnitt eines flexiblen Kabels angepaßt ist, wobei weiterhin die Abmaße des Gehäuse derart gewählt sind, daß das Gehäuse sowohl durch die Montageöffnung einer Paneeldecke schiebbar ist wie auch zwischen die Paneeldecke und eine von dieser abgehängte Raumdecke. Bei dieser aus dem Stand der Technik bekannten Dose ist also vorgesehen, daß eine Montage der Dose, also eine Fixierung der Dose, an einem vorbestimmten Ort, dadurch erfolgt, daß sie in einen Zwischenraum zwischen z. B. einer Paneeldecke und einer von dieser abgehängten Raumdecke eingeführt wird, so daß sie auf der Raumdecke aufliegt.

Damit ist mit der aus der DE 202 09 701 U1 bekannten Dose der Nachteil verbunden, daß alternative Fixierungen der Dose praktisch nicht möglich sind. Weiterhin ist bei dieser Dose eine aufwendige Zugentlastung vorgesehen, die eine separate Verschraubung oder zumindest eine Verschraubung von zwei Gehäusehälften miteinander erfordert.

Ausgehend davon ist es die Aufgabe der Erfindung, eine solche Dose anzugeben, die eine einfach handhabbare Zugentlastung aufweist und universell montierbar ist.

Auf der Grundlage der eingangs genannten Dose ist die zuvor hergeleitete und aufgezeigte Aufgabe dadurch gelöst, daß das Gehäuse an einer eine Öffnung aufweisenden Gehäusewand eine Zugentlastungslasche mit zwei Bohrung aufweist, deren Durchmesser jeweils derart bemessen ist, daß ein der Dose zuzuführendes Kabel durch die Bohrungen durchführbar ist, und an der gegenüberliegenden Gehäusewand eine Haltelasche vorgesehen ist, die eine Ausnehmung für den Eingriff eines Hakens aufweist.

Erfindungsgemäße ergibt sich damit die Möglichkeit, die Dose als berührsichere Dose für eine Renovierungsleuchte zu verwenden, wie auch weiter unten noch ausgeführt. Aufgrund der Haltelasche kann dabei insbesondere vorgesehen sein, daß die Renovierungsleuchte nicht nur über die Kabel aufgehängt und gehalten wird, sondern auch z. B. über einen an einem Seil befindlichen Haken, der in die Ausnehmung der Haltelasche eingeführt ist. Darüber hinaus gewährleistet die Zugentlastungslasche eine effektive Zugentlastung des von der Renovierungsleuchte her kommenden, der Dose zugeführten Kabels: Das Kabel wird durch die beiden Bohrungen geführt, so daß die angreifenden Kräfte praktisch vollständig von der Zugentlastungslasche aufgenommen werden.

Gemäß einer bevorzugten Weiterbildung der Erfindung ist vorgesehen, daß die Öffnungen jeweils einen flexiblen Rand aufweisen, so daß ein derartiges Kabel in die jeweilige Öffnung einbringbar ist, dessen Durchmesser wenigstens bereichsweise größer ist als die Innenabmessungen der Öffnung, wodurch eine Verklemmung der Außenisolierung des Kabels in der Öffnung und damit eine Zugentlastung des Kabels erzielt wird. Damit wird also eine solche Zugentlastung bereitgestellt, die beim Einführen eines entsprechenden Kabels automatisch wirkt, für die also neben dem ohnehin erforderlichen Einführen des Kabels kein weiterer Arbeitsgang erforderlich ist. Dabei kann der flexible Rand der Öffnung dadurch erzielt werden, daß die Gehäusewand im Randbereich zur Öffnung hin ausgedünnt ist, die Dicke der Gehäusewand im Randbereich zur Öffnung hin also, vorzugsweise kontinuierlich oder in Stufen, geringer wird.

Das Einführen des Kabels wird weiterhin dadurch erleichtert, daß die Gehäusewand gemäß einem bevorzugten Ausführungsbeispiel der Erfindung über der Öffnung zur offenen Seite des Gehäuses hin durchbrochen ist. Vorzugsweise ist weiterhin vorgesehen, daß die Öffnung mit einer entfernbaren Abdeckung verschlossen ist. Diese Abdeckung verschließt die Dose zunächst und kann dann bedarfsweise, nämlich zum Zuführen eines Kabels, herausgebrochen werden.

Es sind wenigstens zwei Kabel der in der Dose vorgesehenen Klemme zuführbar, so daß die Dose z. B. für den Anschluß von sogenannten Renovierungsleuchten eingesetzt werden kann. Dabei wird der Dose einerseits, wie zuvor beschrieben, ein Kabel zugeführt, das für den Anschluß einer Lampe vorgesehen ist, und andererseits ein Kabel, das zu einer einfachen Leuchtbirnenfassung führt, die zusammen mit einer entsprechenden Leuchtbirne eine sogenannte Renovierungsleuchte bildet. Bei der Durchführung von Baumaßnahmen in Gebäuden ist auf diese Weise in den verschiedenen Räumen auf einfache Weise Licht verfügbar, wobei der Anschluß an das Stromnetz, der typischerweise über Lüsterklemmen realisiert wird, aufgrund der Dose berührsicher, vorzugsweise nach Schutzart IP 30, ausgeführt werden kann.

Gemäß einer bevorzugten Weiterbildung der Erfindung ist die Zugentlastungslasche parallel zum Boden des Gehäuses und senkrecht zu der Gehäusewand angeordnet, an der sie befestigt ist. So kann über die Außenisolierung des Kabels eine Lampe gehalten werden. Dabei ist gemäß einer bevorzugten Weiterbildung der Erfindung vorgesehen, daß die Zugentlastungslasche in der selben Ebene wie der Gehäuseboden verläuft.

Gemäß einer bevorzugten Weiterbildung der Erfindung ist vorgesehen, daß das Gehäuse an einer eine Öffnung aufweisenden Gehäusewand eine erste weitere Lasche mit einer Ausnehmung aufweist, wobei die Ausnehmung der ersten weiteren Lasche vorzugsweise eine solche Durchführungsrichtung aufweist, die parallel zum Gehäuseboden und parallel zu der Gehäusewand verläuft, an der sie befestigt ist. Die erste weitere Lasche ist damit insbesondere dazu geeignet, die Dose z. B. mittels eines Kabelbinders z. B. an einem Rohr oder einer Stange zu befestigen.

Grundsätzlich kann dazu eine einzige erste weitere Lasche ausreichend sein. Gemäß einer bevorzugten Weiterbildung der Erfindung ist jedoch vorgesehen, daß die Dose wenigsten zwei erste weitere Laschen aufweist, wobei die beiden ersten weiteren Laschen genau hintereinander angeordnet sind, so daß insgesamt eine durch die beiden ersten weiteren Laschen führende Durchführungsrichtung erzielt wird, die parallel zum Gehäuseboden und parallel zu der Gehäusewand verläuft, an der die beiden ersten weiteren Laschen befestigt sind. Mit zwei ersten weiteren Laschen wird die Befestigung der Dose z. B. mittels eines Kabelbinders noch verläßlicher.

Zusätzlich oder alternativ zu der ersten Lasche ist gemäß einer bevorzugten Weiterbildung der Erfindung, bei Vorhandensein von zwei ersten weiteren Laschen zwischen den beiden ersten weiteren Laschen, an der Gehäusewand eine zweite weitere Lasche vorgesehen, die vorzugsweise parallel zum Gehäuseboden und senkrecht zu der Gehäusewand verläuft, an der die zweite weitere Lasche befestigt ist. Dabei weist die zweite weitere Lasche eine Bohrung auf, deren Durchführungsrichtung vorzugsweise senkrecht zum Gehäuseboden und parallel zu der Gehäusewand verläuft, an der die zweite weitere Lasche befestigt ist. Gemäß einer bevorzugten Weiterbildung der Erfindung liegt die zweite weitere Lasche weiterhin in derselben Ebene wie der Gehäuseboden. Dabei kann die zweite weitere Lasche verschiedene Funktionen übernehmen, wobei sie insbesondere für eine Anschraubbefestigung der Dose, ggf. aber auch für die Durchführung eines Kabels, geeignet ist.

Gemäß einer bevorzugten Weiterbildung der Erfindung ist vorgesehen, daß die Haltelasche parallel zum Gehäuseboden und senkrecht zu der Gehäusewand verläuft, an der sie befestigt ist, wobei die Ausnehmung der Haltelasche eine Durchführungsrichtung aufweist, die senkrecht zum Gehäuseboden und parallel zu der Gehäusewand verläuft, an der die Haltelasche befestigt ist. Dabei ist vorzugsweise vorgesehen, daß die Haltelasche in der Ebene liegt, in der der Gehäuseboden verläuft. Wie schon gesagt, eignet sich die Haltelasche damit insbesondere zur Befestigung der Dose an einem Haken.

Als Gehäusedeckel kann ein solcher Deckel vorgesehen sein, wie grundsätzlich auch aus dem Stand der Technik bekannt. Gemäß einer bevorzugten Weiterbildung der Erfindung ist jedoch vorgesehen, daß der Gehäusedeckel an wenigstens einem Randbereich eine Abschrägung aufweist. Diese Abschrägung reduziert die Höhe der Dose im Randbereich, so daß ein einfacheres Einführen der Dose in z. B. die Montageöffnung einer Paneeldecke ermöglicht wird.

Schließlich ist gemäß einer bevorzugten Weiterbildung der Erfindung vorgesehen, daß der Gehäusedeckel auf- und zuschwenkbar ist, z. B. mittels eines Filmscharniers, und vorzugsweise weiterhin mittels einer mit einer Gehäusewand zusammenwirkenden Rasteinrichtung in geschlossener Stellung fixierbar ist. Damit ist der Gehäusedeckel unverlierbar am Gehäuse befestigt, und gleichzeitig kann im geschlossenen Zustand des Gehäusedeckels die Realisierung der Schutzart IP 30 gewährleistet werden.

Im einzelnen gibt es nun eine Vielzahl von Möglichkeiten, die erfindungsgemäße Dose auszugestalten und weiterzubilden. Dazu wird auf die dem Patentanspruch 1 nachgeordneten Patentansprüche sowie auf die nachfolgende detaillierte Beschreibung eines bevorzugten Ausführungsbeispiels der Erfindung unter Bezugnahme auf die Zeichnung verwiesen. In der Zeichnung zeigt
- Fig. 1a: eine Dose gemäß einem bevorzugten Ausführungsbeispiel der Erfindung in perspektivischer Ansicht in geschlossenem Zustand,
- Fig. 1b: die Dose gemäß dem bevorzugten Ausführungsbeispiel der Erfmdung in perspektivischer Ansicht in geöffnetem Zustand,
- Fig. 2a: die geöffnete Dose gemäß dem bevorzugten Ausführungsbeispiel der Erfindung in einer Seitenansicht,
- Fig. 2b: die geöffnete Dose gemäß dem bevorzugten Ausführungsbeispiel der Erfindung in Draufsicht und
- Fig. 2c: die geöffnete Dose gemäß dem bevorzugten Ausführungsbeispiel der Erfindung in einer Ansicht von vorne.

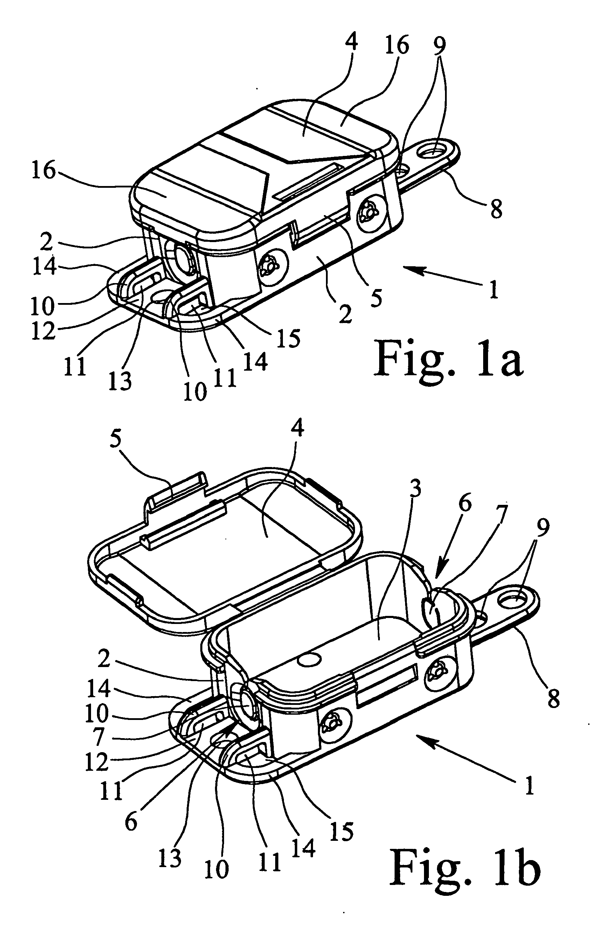

Wie die in den Fig. 1a und 1b gezeigten perspektivischen Ansichten einer Dose gemäß einem bevorzugten Ausführungsbeispiel der Erfindung zeigen, weist die Dose ein Gehäuse 1 mit Gehäusewänden 2 und einem Gehäuseboden 3 auf. Ein Gehäusedeckel 4 dient zum Verschließen der Dose. Dazu ist der Gehäusedeckel 4 schwenkbar mit einer Gehäusewand 2 verbunden, wobei zur Fixierung des Gehäusedeckels 4 an diesem eine in geschlossenem Zustand mit einer Gehäusewand 2 zusammenwirkende Rasteinrichtung 5 vorgesehen ist.

An zwei einander gegenüberliegenden Seiten weist das Gehäuse 1 jeweils eine Öffnung 6 auf, die jeweils mit einer entfernbaren Abdeckung 7 verschlossen sind. Die Abdeckungen 7 sind mittels dünner Stege mit der jeweiligen Gehäusewand 2 verbunden, so daß die Abdeckungen 7 leicht herausgebrochen werden können. Bei herausgebrochener Abdeckung 7 kann dann, insbesondere da die jeweilige Gehäusewand 2 über der Öffnung 6 zur offenen Seite des Gehäuses 1 hin durchbrochen ist, ein nicht weiter dargestelltes Kabel von der offenen Seite des Gehäuses 1 her in die Öffnung 6 eingebracht werden.

Der Rand der Öffnungen 6 ist flexibel, in diesem Randbereich ist die jeweilige Gehäusewand 2 zur Öffnung 6 hin kontinuierlich ausgedünnt. Das heißt, daß die Dicke der jeweiligen Gehäusewand 2 im Randbereich der Öffnung 6 zur Öffnung 6 hin kontinuierlich dünner wird. Damit ist es möglich, in die jeweilige Öffnung 6 ein solches Kabel einzubringen, dessen Durchmesser wenigstens bereichsweise größer ist als die Innenabmessungen der jeweiligen Öffnung 6. Daß der Durchmesser des nicht weiter dargestellten Kabels wenigstens bereichsweise größer ist als die Innenabmessungen der Öffnung bedeutet konkret, daß es es zu einer wenigstens bereichsweise wirkenden Verklemmung der Außenisolierung des Kabels in der Öffnung 6 kommt, wodurch eine Zugentlastung des Kabels erzielt wird.

Die Abdeckungen 7 in den Öffnungen 6 werden nur bedarfsweise herausgebrochen, so daß die Dose gemäß dem hier beschriebenen bevorzugten Ausführungsbeispiel der Erfindung bei nur einer herausgebrochenen Abdeckung 7 z. B. als Abschlußdose für ein nicht weiter dargestelltes, in einer ebenfalls nicht dargestellten Lüsterklemme endendes Kabel dienen kann. Andererseits ist es, wenn beide Abdeckungen 7 aus den Öffnungen 6 herausgebrochen sind, auch möglich, der Dose gemäß dem bevorzugten Ausführungsbeispiel der Erfindung zwei Kabel zuzuführen, so daß die Dose z. B. für den Anschluß einer sogenannten Renovierungsleuchte dienen kann. Dadurch, daß die Dose neben den Öffnungen 6 keine weiteren Öffnungen aufweisen muß, kann damit für die in der Dose vorgesehene Lüsterklemme Berührsicherheit entsprechend Schutzart IP 30 realisiert werden.

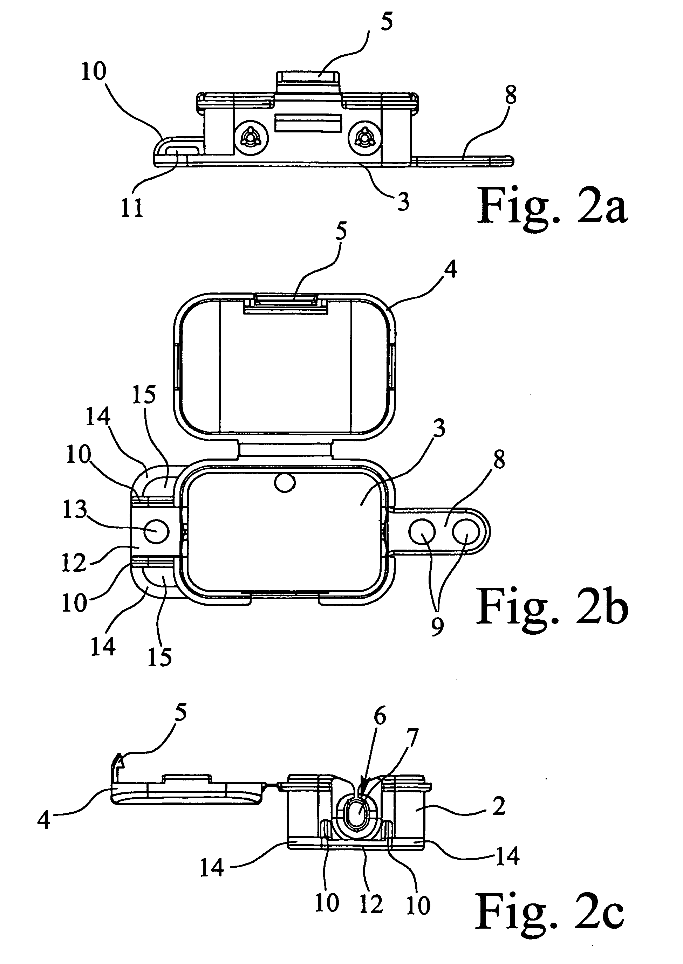

Wie nun auch aus den Fig. 2a bis 2c ersichtlich, weist die Dose gemäß dem bevorzugten Ausführungsbeispiel der Erfindung eine Mehrzahl von Laschen auf. In Fig. 2b rechts dargestellt ist eine Zugentlastungslasche 8, die mit zwei hintereinander angeordneten und unterschiedliche Abstände zur Gehäusewand 2 aufweisenden Bohrungen 9 versehen ist. Der Durchmesser der Bohrungen 9 ist derart bemessen, daß ein der Dose zuzuführendes Kabel durchführbar ist, das in der Dose aufgrund der Öffnungen 6 mit flexiblem Rand eine Zugentlastung erfährt. Auf diese Weise kann eine Halterung einer Lampe mittels des Anschlußkabels der Lampe erzielt werden. Aus Fig. 2a ist dabei erkennbar, daß die Zugentlastungslasche 8 in der selben Ebene wie der Gehäuseboden 3 liegt.

Auf der Seite des Gehäuses 1, die der Zugentlastungslasche 8 gegenüberliegt, sind nun weitere Laschen 10, 12, 14 vorgesehen. Unter anderem sind dort nämlich zwei erste weitere Laschen 10 angeordnet, die jeweils eine Ausnehmung 11 aufweisen. Die beiden ersten weiteren Laschen 10 sind genau hintereinander angeordnet, und die Durchführungsrichtung der Ausnehmungen 11 in den ersten weiteren Laschen 10 verlaufen parallel zum Gehäuseboden 3 und parallel zu der Gehäusewand 2, an der die ersten weiteren Laschen 10 befestigt sind, so daß insgesamt eine durch die beiden ersten weiteren Laschen 10 führende Durchführungsrichtung erzielt wird, die ebenfalls parallel zum Gehäuseboden 3 und parallel zu der Gehäusewand 2 verläuft, an der die beiden ersten weiteren Laschen 10 befestigt sind. Auf diese Weise wird durch die beiden ersten weiteren Laschen 10 eine effektive Befestigungsmöglichkeit mittels eines durch die Ausnehmungen 11 durchzuführenden Kabelbinders erzielt.

Weiterhin ist zwischen den beiden ersten weiteren Laschen 10 an der Gehäusewand 2 eine zweite weitere Lasche 12 vorgesehen. Die zweite weitere Lasche 12 verläuft parallel zum Gehäuseboden 3 und senkrecht zu der Gehäusewand 2, an der die zweite weitere Lasche 12 befestigt ist. Außerdem weist die zweite weitere Lasche 12 eine Bohrung 13 auf, deren Durchführungsrichtung senkrecht zum Gehäuseboden 3 und parallel zu der Gehäusewand 2 verläuft, an der die zweite weitere Lasche 12 befestigt ist. Dabei ist auch vorgesehen, daß die zweite weitere Lasche 12 in derselben Ebene wie der Gehäuseboden 3 verläuft. Damit kann die zweite weitere Lasche 12 insbesondere für eine Anschraubbefestigung der Dose z. B. an einer Wand oder einer Decke dienen.

Schließlich ist seitlich neben den ersten weiteren Laschen 10 jeweils eine Haltelasche 14 vorgesehen. Die Haltelaschen 14 verlaufen jeweils parallel zum Gehäuseboden 3 und senkrecht zu der Gehäusewand 2, an der die Haltelaschen 14 befestigt sind. Außerdem weisen die Haltelaschen 14 jeweils eine Ausnehmung 15 auf, deren jeweilige Durchführungsrichtung senkrecht zum Gehäuseboden 3 und parallel zu der Gehäusewand 2 verläuft, an der die Haltelaschen 14 befestigt sind. Außerdem liegen die Haltelaschen 14 ebenfalls in der Ebene des Gehäusebodens 3. Die Haltelaschen 14 können insbesondere zum Aufhängen der Dose gemäß dem bevorzugten Ausführungsbeispiel der Erfindung an einen Haken dienen, nämlich z. B. an einen solchen Haken, der zum Aufhängen einer Lampe gedacht ist.

Weiterhin ist die Dose gemäß dem vorliegend beschriebenen bevorzugten Ausführungsbeispiel der Erfindung derart ausgebildet, daß die Dose auf einfache Weise z. B. in die Montageöffnung einer Paneeldecke einschiebbar ist. Dazu weist der Gehäusedeckel 4, wie z. B. Fig. 1a entnehmbar, an den Seiten, an denen die Zugentlastungslasche 8 bzw. die ersten weiteren Laschen 10, die zweite weitere Lasche 12 und die Haltelasche 14 vorgesehen sind, jeweils eine Abschrägung 16 im Randbereich auf. Dies erleichtert das schräge Einschieben in die Montageöffnung einer Paneeldecke, da damit ein tieferes Einschieben in die Montageöffnung ermöglicht wird, ohne daß die Dose mit ihrem Gehäusedeckel 4 an der Decke anschlägt.

## Patentansprüche

1. Berührsichere Dose zur Aufnahme einer Klemme, wie einer Lüsterklemme, mit einem Gehäusewände (2) und einen Gehäuseboden (3) aufweisenden Gehäuse (1) sowie einem Gehäusedeckel (4) zum Verschließen der offenen Seite des Gehäuses (1), wobei das Gehäuse (1) in einander gegenüberliegenden Seiten des Gehäuses (1) jeweils eine Öffnung (6) für die Zuführung eines eine Außenisolierung und darin vorgesehene elektrische Leiter umfassenden Kabels zu der Klemme aufweist, **dadurch gekennzeichnet, daß** das Gehäuse (1) an einer eine Öffnung (6) aufweisenden Gehäusewand (2) eine Zugentlastungslasche (8) mit zwei Bohrung (9) aufweist, deren Durchmesser jeweils derart bemessen ist, daß ein der Dose zuzuführendes Kabel durch die Bohrungen (9) durchführbar ist, und an der gegenüberliegenden Gehäusewand eine Haltelasche (14) vorgesehen ist, die eine Ausnehmung für den Eingriff eines Hakens aufweist.

2. Dose nach Anspruch 1, **dadurch gekennzeichnet, daß** die Zugentlastungslasche (8) parallel zum Gehäuseboden (3) und senkrecht zu der Gehäusewand (2) verläuft, an der die Zugentlastungslasche (8) befestigt ist.

3. Dose nach Anspruch 1 oder 2, **dadurch gekennzeichnet, daß** die Öffnunggen (6) jeweils einen flexiblen Rand aufweisen, so daß ein derartiges Kabel in die Öffnung (6) einbringbar ist, dessen Durchmesser wenigstens bereichsweise größer ist als die Innenabmessungen der Öffnung (6), wodurch eine Verklemmung der Außenisolierung des Kabels in der Öffnung (6) und damit eine Zugentlastung des Kabels erzielt wird.

4. Dose nach einem der Ansprüche 1 bis 3, **dadurch gekennzeichnet, daß** die Gehäusewand (2) über der Öffnung (6) zur offenen Seite des Gehäuses (1) hin durchbrochen ist und vorzugsweise die Öffnung (6) mit einer entfernbaren Abdeckung (7) verschlossen ist.

5. Dose nach einem der Ansprüche 1 bis 4, **dadurch gekennzeichnet, daß** die Zugentlastungslasche (8) in derselben Ebene wie der Gehäuseboden (3) verläuft.

6. Dose nach einem der Ansprüche 1 bis 5, **dadurch gekennzeichnet, daß** das Gehäuse (1) an einer eine Öffnung (6) aufweisenden Gehäusewand (2) eine erste weitere Lasche (10) mit einer Ausnehmung (11) aufweist, deren Durchführungsrichtung vorzugsweise parallel zum Gehäuseboden (3) und parallel zu der Gehäusewand (2) verläuft, an der die erste weitere Lasche (10) befestigt ist.

7. Dose nach Anspruch 6, **dadurch gekennzeichnet, daß** wenigstens zwei erste weitere Laschen (10) vorgesehen sind, wobei die beiden ersten weiteren Laschen (10) genau hintereinander angeordnet sind, so daß insgesamt eine durch die beiden ersten weiteren Laschen (10) führende Durchführungsrichtung erzielt wird, die parallel zum Gehäuseboden (3) und parallel zu der Gehäusewand (2) verläuft, an der die beiden ersten weiteren Laschen (10) befestigt sind.

8. Dose nach Anspruch 6 oder 7, **dadurch gekennzeichnet, daß** zwischen den beiden ersten weiteren Laschen (10) an der Gehäusewand (2) eine zweite weitere Lasche (12) vorgesehen ist, die parallel zum Gehäuseboden (3) und senkrecht zu der Gehäusewand (2) verläuft, an der die zweite weitere Lasche (12) befestigt ist, wobei die zweite weitere Lasche (12) vorzugsweise eine Bohrung (13) aufweist, deren Durchführungsrichtung senkrecht zum Gehäuseboden (3) und parallel zu der Gehäusewand (2) verläuft, an der die zweite weitere Lasche (12) befestigt ist.

9. Dose nach einem der Ansprüche 1 bis 8, **dadurch gekennzeichnet, daß** der Gehäusedeckel (4) an wenigstens einem Randbereich eine Abschrägung (16) aufweist.

10. Dose nach einem der Ansprüche 1 bis 9, **dadurch gekennzeichnet, daß** der Gehäusedeckel, vorzugsweise mittels eines Filmscharniers, auf- und zuschwenkbar und mittels einer mit einer Gehäusewand (2) zusammenwirkenden Rasteinrichtung (5) in geschlossener Stellung fixierbar ist.

## Claims

1. Shock-protection box for accommodating a terminal, such as an insulated screw terminal, having a housing (1) which has housing walls (2) and a housing base (3), and also having a housing cover (4) for closing the open side of the housing (1), with the housing (1) having a respective opening (6) for feeding a cable, which comprises an external insulation means and electrical conductors provided in said external insulation means, to the terminal in sides of the housing (1) which are opposite one another, **characterized in that** the housing (1) has a strain relief tab (8), which has two holes (9), on a housing wall (2) which has an opening (6), the diameter of each of said holes being such that a cable which is to be fed to the box can be passed through the holes (9), and a retaining tab (14) which has a recess for a hook to engage in is provided on the opposite housing wall.

2. Box according to Claim 1, **characterized in that** the strain relief tab (8) runs parallel to the housing base (3) and perpendicular to the housing wall (2) to which the strain relief tab (8) is attached.

3. Box according to Claim 1 or 2, **characterized in that** the openings (6) each have a flexible edge, and therefore a cable of this kind, the diameter of which is greater than the internal dimensions of the opening (6) at least in regions, can be inserted into the opening (6), as a result of which the external insulation means of the cable is clamped in the opening (6) and therefore the cable is relieved of strain.

4. Box according to one of Claims 1 to 3, **characterized in that** the housing wall (2) is open above the opening (6) in the direction of the open side of the housing (1), and the opening (6) is preferably closed by a removable covering (7).

5. Box according to one of Claims 1 to 4, **characterized in that** the strain relief tab (8) runs in the same plane as the housing base (3).

6. Box according to one of Claims 1 to 5, **characterized in that** the housing (1) has a first further tab (10), which has a recess (11), on a housing wall (2) which has an opening (6), the passage direction of said recess preferably running parallel to the housing base (3) and parallel to the housing wall (2) to which the first further tab (10) is attached.

7. Box according to Claim 6, **characterized in that** at least two first further tabs (10) are provided, with the two first further tabs (10) being arranged exactly one behind the other, and therefore a passage direction which passes through the two first further tabs (10) and runs parallel to the housing base (3) and parallel to the housing wall (2) to which the two first further tabs (10) are attached is achieved overall.

8. Box according to Claim 6 or 7, **characterized in that** a second further tab (12) is provided between the two first further tabs (10) on the housing wall (2), the said second further tab running parallel to the housing base (3) and perpendicular to the housing wall (2) to which the second further tab (12) is attached, with the second further tab (12) preferably having a hole (13) and the passage direction of said hole running perpendicular to the housing base (3) and parallel to the housing wall (2) to which the second further tab (12) is attached.

9. Box according to one of Claims 1 to 8, **characterized in that** the housing cover (4) has a bevelled portion (16) in at least one edge region.

10. Box according to one of Claims 1 to 9, **characterized in that** the housing cover can be pivoted open and closed, preferably by means of a film hinge, and can be fixed in the closed position by means of a latching device (5) which interacts with a housing wall (2).

## Revendications

1. Prise protégée pour le logement d'une borne, comme une borne de jonction, comprenant un boîtier (1) présentant des parois de boîtier (2) et un fond de boîtier (3) et un couvercle de boîtier (4) pour la fermeture du côté ouvert du boîtier (1), le boîtier (1) présentant dans chacun des côtés opposés du boîtier (1) une ouverture (6) pour l'arrivée d'un câble, comprenant une isolation extérieure et des conducteurs électriques prévus à l'intérieur pour la borne, **caractérisée en ce que** le boîtier (1) présente sur une paroi de boîtier (2) présentant une ouverture (6) une patte de décharge de traction (8) avec deux alésages (9), dont le diamètre est conçu à chaque fois de telle sorte qu'un câble à amener à la prise puisse être espacé à travers les alésages (9) et une patte de retenue (14), qui présente un évidement pour l'engagement d'un crochet, est prévu sur la paroi de boîtier opposée.

2. Prise selon la revendication 1, **caractérisée en ce que** la patte de décharge de traction (8) s'étend parallèlement au fond du boîtier (3) et perpendiculairement à la paroi de boîtier (2), sur laquelle la patte de décharge de traction (8) est fixée.

3. Prise selon la revendication 1 ou 2, **caractérisée en ce que** les ouvertures (6) présentent chacune un bord flexible, de sorte qu'un tel câble peut être introduit dans l'ouverture (6), dont le diamètre est supérieur au moins par endroits aux dimensions intérieures de l'ouverture (6), de sorte qu'un blocage de l'isolation extérieure du câble dans l'ouverture (6) et donc une décharge de traction du câble sont obtenus.

4. Prise selon l'une quelconque des revendications 1 à 3, **caractérisée en ce que** la paroi de boîtier (2) est ajourée au-dessus de l'ouverture (6) en direction du côté ouvert du boîtier (1) et l'ouverture (6) est de préférence fermée avec un revêtement (7) démontable.

5. Prise selon l'une quelconque des revendications 1 à 4, **caractérisée en ce que** la patte de décharge de traction (8) s'étend dans le même plan que le fond de boîtier (3).

6. Prise selon l'une quelconque des revendications 1 à 5, **caractérisée en ce que** le boîtier (1) présente sur une paroi de boîtier (2) présentant une ouverture (6) une première autre patte (10) avec un évidement (11) dont le sens de passage est agencé de préférence parallèlement au fond de boîtier (3) et parallèlement à la paroi de boîtier (2), sur laquelle la première autre patte (10) est fixée.

7. Prise selon la revendication 6, **caractérisée en ce qu'**il est prévu au moins deux premières autres pattes (10), les deux premières autres pattes (10) étant disposées exactement l'une derrière l'autre, de sorte qu'on obtient globalement un sens de passage traversant les deux premières autres pattes (10), qui est parallèle au fond de boîtier (3) et parallèle à la paroi de boîtier (2), sur laquelle les deux premières autres pattes (10) sont fixées.

8. Prise selon la revendication 6 ou 7, **caractérisée en ce qu'**il est prévu entre les deux premières autres pattes (10) sur la paroi de boîtier (2) une seconde autre patte (12), qui s'étend parallèlement au fond de boîtier (3) et perpendiculairement à la paroi de boîtier (2), sur laquelle la seconde autre patte (12) est fixée, la seconde autre patte (12) présentant de préférence un alésage (13) dont le sens de passage est perpendiculaire au fond de boîtier (3) et parallèle à la paroi de boîtier (2), sur laquelle la seconde autre patte (12) est fixée.

9. Prise selon l'une quelconque des revendications 1 à 8, **caractérisée en ce que** le couvercle de boîtier (4) présente un chanfrein (16) sur au moins une zone périphérique.

10. Prise selon l'une quelconque des revendications 1 à 9, **caractérisée en ce que** le couvercle de boîtier peut être ouvert et fermé par basculement, de préférence au moyen d'une charnière à film et peut être fixé dans la position fermée au moyen d'un dispositif d'encliquetage (5) coopérant avec une paroi de boîtier (2) .
